# EUROPÄISCHE PATENTANMELDUNG

(11) **EP 2 282 484 A1**
(43) Veröffentlichungstag der Anmeldung: **09.02.2011**
(21) Anmeldenummer: 10007285.9
(22) Anmeldetag: 14.07.2010
(51) Int. Cl.: H04L 29/08, G01D 4/00, H04L 12/28, H04N 7/00, H04N 5/445

(54) **Verfahren und System zum Darstellen von Informationen über den Energieverbrauch**

(30) Priorität: 14.07.2009 DE 102009033246
(71) Anmelder: Power Plus Communications AG, 68167 Mannheim (DE)
(72) Erfinder: Mayer, Eugen, 68305 Mannheim (DE)
(74) Vertreter: Ullrich & Naumann

(57) **Zusammenfassung**

Ein Verfahren zum Darstellen von Informationen über den Energieverbrauch eines Nutzers ist im Hinblick auf eine flexible, kostengünstige und mit geringem Aufwand realisierbare Darstellbarkeit der Informationen gekennzeichnet durch die Schritte: Auslesen eines elektronischen Stromzählers (2, 3) bei dem Nutzer zum Ermitteln von Daten über den Energieverbrauch, Übermitteln der Daten an einen Server (5), Aufbereiten der Daten durch den Server (5), Übermitteln der aufbereiteten Daten an eine Einheit (6) bei dem Nutzer und Darstellen der von der Einheit (6) empfangenen Daten auf einem mit der Einheit (6) verbundenen Fernsehgerät (7). Ein entsprechendes System ist angegeben.

## Beschreibung

Die Erfindung betrifft ein Verfahren und ein System zum Darstellen von Informationen über den Energieverbrauch eines Nutzers.

In der Praxis gibt es verschiedene Ansätze, Endverbrauchern Informationen über den Energieverbrauch zur Verfügung zu stellen. Hierbei kommen verstärkt elektronische Systeme zum Einsatz, bei denen ein elektronischer Stromzähler, meist ein sogenannter Smart-Meter, über eine Kommunikationsverbindung ausgelesen wird. Der Stromzähler misst den Energieverbrauch und übermittelt die Daten elektronisch an den Energieversorger oder die Daten werden vom Energieversorger aus elektronisch abgefragt. Die Übermittlung der Daten erfolgt meist über den Hausanschluss unter Verwendung von PLC (PowerLine Communication), d.h. die Daten werden auf die normalen Stromleitungen moduliert und über den Hausanschluss zum Energieversorger übertragen. Das Auslesen des Zählers und Übermitteln der Daten an den Backend-Server erfolgt üblicherweise periodisch. Als besonders praktikabel hat sich ein Intervall von 15 min erwiesen. Der Gesetzgeber sieht vor, die Daten allen Kunden zur Verfügung zu stellen, um durch eine verbesserte Transparenz den Stromverbrauch zu reduzieren.

Zur Anzeige sind aus der Praxis prinzipiell zwei Technologien bekannt. Bei einem System werden Verbrauchsdaten innerhalb des Gebäudes oder Hauses über eine schmalbandige Punkt-zu-Punkt-Verbindung - meist Funk oder PLC - vom Zähler zu einem Display - einem sogenannten InHouse-Display - übertragen und dem Endverbraucher angezeigt. Die Infrastruktur ist vollständig bei dem Endkunden aufgebaut, wodurch die Daten lediglich innerhalb des Hauses oder Gebäudes übertragen werden müssen. Der Kunde muss über keine externe Kommunikationsverbindung, beispielsweise in Form eines lnternetzugangs, zum Übertragen der Verbrauchsdaten zum Anzeigen der Verbrauchsdaten verfügen.

Nachteilig ist, dass diese Lösung ein abgestimmtes System aus Zähler und Display erfordert. Es werden spezielle Zähler benötigt, die zwei Schnittstellen bereitstellen: Eine Schnittstelle zur Kommunikation mit dem Display und eine für das Auslesen des Zählers durch den Energieversorger. Durch die zweite Schnittstelle erhöhen sich die Kosten für den Stromzähler unverhältnismäßig. Zum anderen können bei Wechsel des Zählers nur solche Zähler eingesetzt werden, die mit dem Display kommunizieren können. Alternativ muss das Display ebenfalls ausgetauscht werden. Durch den Umstand, dass es keine unabhängigen Displayhersteller gibt, ist die Auswahl möglicher Zähler stark eingeschränkt.

Ein weiterer Nachteil ist, dass nur Informationen angezeigt werden können, die im Zähler generiert werden. Andere oder zusätzliche Informationen, wie beispielweise Verbrauchswerte einer Vergleichsgruppe, sind nur schwer oder umständlich in das System integrierbar. Ferner stehen dem Kunden die Daten nur über ein proprietäres Gerät zur Verfügung. Eine Bereitstellung der Daten, z.B. für eine professionelle Energieberatung, ist nicht oder nur sehr schwer möglich. Darüber hinaus ist es technisch kaum möglich, Software-Aktualisierungen in die Displays einzuspielen. All dies macht die Systeme unflexibel und teuer.

Ein anderes, aus der Praxis bekanntes System nutzt das Internet zum Übermitteln der Verbrauchsdaten an einen Computer des Nutzers. Ein Zähler ermittelt den Energieverbrauch und überträgt die Verbrauchsdaten zum Energieversorger, der die Verbrauchsdaten auf einem Web-Server bereitstellt. Der Endkunde loggt sich über das Internet an dem Web-Server ein und erhält die Möglichkeit, sich Verbrauchsdaten und gegebenenfalls weitere Informationen anzeigen zu lassen. Voraussetzung ist dabei, dass der Kunde über einen Rechner mit Internetzugang verfügt. Ferner muss der Kunde Erfahrung im Umgang mit Webportalen haben. Beide Voraussetzungen sind nicht in allen Haushalten gegeben. In Deutschland liegt die Abdeckung mit Internetzugängen beispielsweise bei ca. 75 %, so dass 25 % der Bevölkerung auf diesem Wege nicht erreichbar sind. Insbesondere ältere Menschen verfügen selten über einen Internetzugang oder das notwendige Wissen.

Der vorliegenden Erfindung liegt daher die Aufgabe zugrunde, ein Verfahren und ein System der eingangs genannten Art derart auszugestalten und weiterzubilden, dass einem Benutzer flexibel, kostengünstig und mit geringem Aufwand Informationen über den Energieverbrauch zur Verfügung gestellt werden können.

Erfindungsgemäß wird die voranstehende Aufgabe durch die Merkmale des Anspruchs 1 gelöst. Danach ist das in Rede stehende Verfahren gekennzeichnet durch die Schritte: Auslesen eines elektronischen Stromzählers bei dem Nutzer zum Ermitteln von Daten über den Energieverbrauch, Übermitteln der Daten an einen Server, Aufbereiten der Daten durch den Server, Übermitteln der aufbereiteten Daten an eine Einheit bei dem Nutzer und Darstellen der von der Einheit empfangenen Daten auf einem mit der Einheit verbundenen Fernsehgerät.

In vorrichtungsmäßiger Hinsicht ist die voranstehende Aufgabe durch die Merkmale des Anspruchs 10 gelöst. Danach umfasst das in Rede stehende System einen elektronischen Stromzähler zum Ermitteln von Daten über den Energieverbrauch, ein Gateway, der zum Auslesen von Zählerständen aus dem Stromzähler und zum Weiterleiten von Daten in ein vorzugsweise breitbandiges Netzwerk ausgestaltet ist, einen Server, der zum Empfangen von Daten von dem Gateway und zum Aufbereiten der Daten von dem Gateway ausgestaltet ist, und eine Einheit, die zum Empfangen von aufbereiteten Daten von dem Server ausgestaltet ist und mit einem Fernsehgerät zum Darstellen von Informationen über den Energieverbrauch verbunden ist.

In erfindungsgemäßer Weise ist zunächst erkannt worden, dass die Vorzüge der aus der Praxis bekannten Lösungen auf einfache Weise kombiniert werden können. Hierzu wird erfindungsgemäß eine Einheit eingesetzt, die mit einem Fernsehgerät verbunden ist. Durch die Einheit werden Daten über den Energieverbrauch zur Darstellung auf dem Fernsehgerät aufbereitet und anschließend auf dem Fernsehgerät ausgegeben. Fernsehgeräte sind in Deutschland in 95% aller Haushalte verfügbar, so dass in Deutschland eine wesentlich höhere Haushaltsabdeckung als im Falle eines Internetzugangs gegeben ist. Dies trägt dazu bei, dass das erfindungsgemäße Verfahren und das erfindungsgemäße System mit sehr geringem Aufwand bei Nutzern realisierbar sind.

Bei dem Nutzer ist ein elektronischer Stromzähler vorhanden, der den (aktuellen) Energieverbrauch des Nutzers misst. Die Erfindung kann prinzipiell auch in Verbindung mit mehreren Stromzählern eingesetzt werden. Die einzelnen Verfahrensschritte gelten dann entsprechend. Nachfolgend wird der Einfachheit wegen lediglich von einem Stromzähler die Rede sein. Die sollte jedoch nicht als Einschränkung der Lehre auf diesen Fall angesehen werden.

Der Stromzähler wird zur Ermittlung von Daten über den Energieverbrauch ausgelesen. Dies erfolgt durch Senden einer Anfrage des Servers an den Stromzähler (Poll). In Reaktion auf die Anfrage sendet der Stromzähler die ermittelten Verbrauchsdaten an den Server. Alternativ sendet der Stromzähler von sich aus die ermittelten Verbrauchsdaten an den Server (Push). Die per Poll oder Push übermittelten Daten werden durch den Server aufbereitet. Die Aufbereitung durch den Server stellt ganz allgemein eine Umwandlung der empfangenen Daten in eine systematische Struktur dar. Die durch den Server aufbereiteten Daten werden danach an die Einheit bei dem Nutzer übermittelt und wiederum durch diese zur Darstellung auf dem mit der Einheit verbundenen Fernsehgerät aufbereitet. Die Aufbereitung durch die Einheit umfasst das Erzeugen von Bild- und gegebenenfalls Audioinformationen unter Verwendung der empfangenen Daten. Über eine Standardschnittstelle des Fernsehers, wie beispielsweise einen Scart- oder einen Antennenanschluss, werden die durch die Einheit aufbereiteten Daten an das Fernsehgerät gesendet und durch das Fernsehgerät dem Benutzer dargestellt.

Die Verbindung zwischen Server und Einheit erfolgt über eine Direktverbindung, wodurch kein Internetzugang notwendig ist. Die Einheit ist besonders zur Darstellung der Verbrauchsinformationen ausgestaltet, wodurch auf besondere Anmeldeverfahren, wie sie bei internetbasierten Systemen durch Anmeldung an einem Web-Portal üblich sind, verzichtet werden kann. Das Einschalten der Einheit und das Einstellen des Fernsehgeräts auf den entsprechenden Kanal genügen, um Verbrauchsinformationen auf dem Fernsehgerät zu erhalten. Das erfindungsgemäße Verfahren läuft danach automatisch ab und Informationen über den Energieverbrauch werden dem Benutzer dargestellt, ohne dass aufwändige Konfigurationsarbeiten oder andere Bedienvorgänge durch den Nutzer notwendig wären. Auf diese Weise kann ein System realisiert werden, das sehr einfach zu bedienen ist und für das weder ein Internetzugang noch spezielle Kenntnisse notwendig sind.

Die aus dem elektronischen Stromzähler ausgelesenen und an den Server übermittelten Daten werden im Allgemeinen in einem nicht-flüchtigen Speicher gespeichert. Dies ist im Allgemeinen eine Festplatte, auf die der Server Zugriff hat. Das Abspeichern der Daten erfolgt sinnvollerweise in aufbereiteter Form.

Vorzugsweise werden die aufbereiteten und beim Server gespeicherten Daten von der Einheit abgefragt. Hierzu sendet die Einheit über die Kommunikationsverbindung zwischen Server und Einheit eine Anfrage an den Server, der in Reaktion auf die Anfrage aufbereitete Daten an die Einheit sendet. Die Anfrage kann Anfrageparameter beinhalten. Die Anfrageparameter definieren beispielsweise, welche Daten für welchen Zeitraum mit welcher Genauigkeit benötigt werden.

Gegebenenfalls können mit den aufbereiteten Daten weitere Daten an die Einheit übermittelt werden. Welche weiteren Daten an die Einheit übermittelt werden, kann bei dem Server hinterlegt sein. Hierzu könnte eine Konfiguration in dem Kundendatensatz oder eine globale Konfiguration für mehrere Kunden vorhanden sein. Auf diese Weise können die weiteren Daten zusammengestellt werden, ohne dass der Nutzer durch die Auswahl besonderer Datenquellen belastet wird. Alternativ oder zusätzlich können die weiteren Daten an der Einheit definiert werden. Hierzu könnte der Nutzer in einer Bedienoberfläche die gewünschten Daten auswählen. Andere nutzbare Konfigurationsmöglichkeiten sind aus der Praxis bekannt.

Die weiteren Daten können Vergleichsdaten über den durchschnittlichen Energieverbrauch einer Vergleichsgruppe enthalten. Lebt bei dem Benutzer beispielsweise eine vierköpfige Familie, so ließe sich die Vergleichsgruppe "vierköpfige Familie" bilden. Des Weiteren können Wetter- oder Wettervorhersagedaten in den weiteren Informationen enthalten sein. Diese Informationen können zur Vorhersage des Energieverbrauchs in der näheren Zukunft oder zur Bereinigung von wetterbedingten Einflüssen auf den Energieverbrauch herangezogen werden. So wird bspw. im Winter mit einem erhöhten Stromverbrauch durch verstärkte Beleuchtung, Heizgeräte oder ähnlichem zu rechnen sein. Im Sommer werden Kühlgeräte verstärkt Storm aufnehmen. Ferner können die weiteren Daten den aktuellen Energiepreis oder die Energiekosten innerhalb eines Zeitraums enthalten. Diese nicht abschließende Auflistung zeigt, wie umfangreich sich die weiteren Daten nutzen lassen und was weitere Daten im Sinne dieser Beschreibung sind. Denkbar wäre beispielsweise ferner, dass durch die Einheit die Energiemenge abgefragt wird, die von einer bei dem Nutzer installierten Photovoltaikanlage erzeugt wird. Auch diese Daten könnten unter Verwendung der Einheit auf dem Fernsehgerät dargestellt werden. Alternativ kann der Server die aufbereiteten Daten regelmäßig an die Einheit senden. Hierzu könnte der Server regelmäßig die aufbereiteten Daten über die Kommunikationsverbindung zwischen Server und Einheit an die Einheit senden. Zusätzlich zu den aufbereiteten Daten können weitere Daten wie zuvor beschrieben gesandt werden.

Das Senden der Daten von dem Server erfolgt vorzugsweise periodisch. Je nach Anforderungen kann dabei eine unterschiedlich lange Periodenlänge gewählt werden. Soll beispielsweise eine möglichst zeitnahe und genaue Darstellung des Energieverbrauchs erzielt werden, können aktuelle Daten in einem Intervall im Bereich von einer Sekunde und darunter bis hin zu einigen zehn Sekunden zu der Einheit gesendet werden. Wenn lediglich Langzeitverbrauchswerte von Interesse sind, bietet sich eine Periodenlänge im Minutenbereich an. Hier hat sich eine Periodenlänge von 15 min als praktikabel erwiesen. Die Periodenlänge kann auch in Abhängigkeit des Darstellungsszenariums geändert werden. So kann beispielsweise bei einer gewünschten zeitnahen Darstellung ein kurzes Intervall gewählt werden, während beim Wechsel zu einer Langzeitdarstellung eine entsprechend höhere Periodenlänge eingestellt werden würde. Die übermittelten Verbrauchsdaten werden im Allgemeinen die während des Erfassungsintervalls bei dem Nutzer verbrauchte Energie beinhalten, so dass die Verbrauchsdaten den aktuellen Verbrauch bei dem Nutzer widerspiegeln.

Das Abfragen der Daten durch die Einheit und das Senden der Daten vom Server an die Einheit kann kombiniert werden. So könnte der Server periodisch mit einer Periodenlänge im Minutenbereich Daten an die Einheit senden. Im Falle einer zeitnaheren und genaueren Darstellung könnte die Einheit zusätzlich Verbrauchsinformation in einem kürzeren Zeitraster abfragt. Auch andere Einsatzszenarien einer kombinierten Datenübermittlung sind denkbar.

Die Aufbereitung der von dem Zähler empfangen Daten durch den Server kann in einem Ablegen der Daten in einer Datenbank bestehen. In diesem Fall würden die empfangenen Daten mit entsprechendem Zeitstempel in die Datenbank aufgenommen werden und für eine spätere Verwertung bereitgehalten werden. Neben dem Energieverbrauch können Werte wie durchschnittliche Leistung, Spitzenleistung und/oder weitere Informationen gespeichert werden. Generell können als Aufbereitung der Daten sämtliche Schritte angesehen werden, die zur systematischen Verarbeitung der Daten geeignet sind.

Die aufbereiteten Daten, die durch die Einheit vom Server empfangen wurden, werden durch die Einheit zur Darstellung aufbereitet. Eine mögliche Aufbereitung der Daten besteht in einer grafischen Umsetzung einer aus der Datenbank erhaltenen Wertemenge. Auf diese Weise wird beispielsweise aus zahlenmäßigen Verbrauchswerten ein Diagramm, in dem die jeweils bei dem Benutzer umgesetzte elektrische Leistung über der Zeit aufgetragen ist. Eine weitere grafische Aufbereitungsmöglichkeit besteht in einer grafischen Darstellung der Differenz zwischen dem momentanen Verbrauch und dem durchschnittlichen Verbrauch während eines Zeitraums, beispielsweise während des Vormonats. Zusätzlich oder alternativ könnte die Entwicklung der Stromkosten grafisch dargestellt werden. Die grafische Aufbereitung wird vorzugsweise in Form eines Diagramms oder einer Grafik auf dem Fernsehgerät dargestellt.

Die grafisch aufbereiteten Daten können neben dem aktuellen Verbrauch eine Verbrauchshistorie widerspiegeln, d.h. den Energieverbrauch in einem zurückliegenden Zeitraum, beispielsweise eine oder mehrere Wochen oder einen oder mehrere Monate. Dem Nutzer könnte die Möglichkeit geboten werde, aus verschiedenen vordefinierten Zeiträumen zu wählen oder einen Zeitraum selbst vorzugeben.

Die grafisch aufbereiteten Daten können in Form eines Standbildes dargestellt werden. Dem Nutzer könnte die Möglichkeit geboten werden, mittels eines Betätigungselements, bspw. einer Fernbedingung, zwischen mehreren Standbildern zu wechseln. Alternativ könnten die grafisch aufbereiteten Daten durch ein wechselndes Standbild wiedergegeben werden, wobei vorzugsweise zyklisch und nach Verstreichen einer gewissen Zeit zu dem nächsten Standbild gewechselt wird. Alternativ zu den Standbildern könnten Animationen zur Darstellung der grafisch aufbereiteten Daten genutzt werden. Animationen lassen sich auch in den Standbilder integrieren. Aus der Praxis ist eine Reihe von Möglichkeiten zur Darstellung von grafisch aufbereiteten Daten bekannt.

Zum Sicherstellen, dass die Verbrauchsdaten eines Nutzers lediglich von einer bestimmten Einheit abgerufen werden, könnte in der Einheit ein Schlüssel abgelegt sein. Alternativ kann der Schlüssel in einem elektronischen Speichergerät abgelegt sein, das mit der Einheit verbunden ist. Hier sei als Beispiel eine SmartCard genannt, die in einen Steckplatz der Einheit eingeführt ist. Mittels des Schlüssels könnte sich die Einheit gegenüber dem Server identifizieren. Der Schlüssel kann bei Verbindungsaufbau mit einem bei dem Server gespeicherten Schlüssel abgeglichen werden, so dass die Verbrauchsdaten des Benutzers nicht unberechtigt abgefragt werden können. Bei Einschalten der Einheit kann die Einheit eine Verbindungsanfrage an den Server senden und mit oder im Nachgang zu der Anfrage den Schlüssel übermitteln. Der Server überprüft danach, ob der Schlüssel bekannt ist und ob die Einheit für ein Verbrauchsmonitoring freigeschaltet ist. Ist der Schlüssel unbekannt, wird die Anfrage abgewiesen. Ist der Schlüssel bekannt, wird eine Verbindung zwischen Server und Einheit aufgebaut, über die die aufbereiteten Verbrauchsdaten von dem Server zu der Einheit gesendet werden können.

Alternativ könnte der Verbindungsaufbau und die Abfrage des Schlüssels durch den Server initiiert werden. So könnte der Server periodisch eine Anfrage in einen Netzwerkbereich senden, auf die die Einheiten, die in dem Netzwerkbereich die Anfrage empfangen, reagieren. Auf diese Weise kann überprüft werden, ob Einheiten mit bestehenden Verbindungen noch erreichbar sind oder ob in dem Netzwerkbereich neue Einheiten erreichbar sind. Je nach Verwendung können auf die Anfrage sämtliche Einheiten in dem Netzwerkbereich antworten oder lediglich die, die noch keine Verbindung zu einem Server herstellen konnten oder deren Verbindung zu dem Server gestört ist.

Zur weiteren Sicherung der Kommunikation zwischen Server und Einheit könnte diese Kommunikation in verschlüsselter Form erfolgen. Auf diese Weise können die übermittelten Daten lediglich von der berechtigten Einheit gelesen werden. Für die Verschlüsselung könnte der bereits erwähnte Schlüssel verwendet werden. Der Schlüssel könnte direkt oder als Berechnungsbasis für einen Kommunikationsschlüssel verwendet werden. Verfahren zur Schlüsselberechnung und zum Aufbau von sicheren Kommunikationsverbindungen sind aus dem Stand der Technik hinlänglich bekannt.

Die durch die Einheit auf dem Fernsehgerät dargestellten Informationen über den aktuellen Stromverbrauch können periodisch aktualisiert werden. Dies könnte mit der Frequenz gesehen, mit der der Stromzähler ausgelesen wird. Damit würde das auf dem Fernsehgerät dargestellte Bild bspw. alle 15 min aktualisiert werden, wenn die Zählerstände alle 15 min ausgelesen werden.

Die Darstellung der Informationen durch die Einheit auf dem Fernsehgerät könnte in Echtzeit erfolgen. Eine Darstellung in Echtzeit bedeutet in diesem Zusammenhang, dass die Daten fortlaufend mit einem kurzen Intervall aktualisiert werden. Die Frequenz der Aktualisierung hängt von der Leistungsfähigkeit der Datenverbindung zwischen Server und Einheit bzw. dem minimalen Abfrageintervall des Stromzählers ab. Hierbei sind Aktualisierungsintervalle im Sekundenbereich erstrebenswert, so dass die auf dem Fernsehgerät dargestellten Verbrauchsinformationen fortlaufend aktualisiert werden und einen möglichst zeitnahen Energieverbrauch widerspiegeln.

Das erfindungsgemäße System, das zur Ausführung des erfindungsgemäßen Verfahrens genutzt werden kann, umfasst einen elektronischen Stromzähler zur Übermittlung von Daten über den Energieverbrauch. Die durch den Zähler gewonnen Daten über den Energieverbrauch werden durch ein Gateway ausgelesen und zu dem Energieversorger gesendet. Der Gateway kann in dem Stromzähler implementiert sein oder als separates Gerät ausgebildet sein. Bei der letztgenannten Ausgestaltung können mehrere Stromzähler mit dem Gateway verbunden sein, so dass der Gateway die Kommunikation für mehrere Zähler durchführt. Als Gateway wird generell die Funktion angesehen, Verbrauchsdaten aus dem elektronischen Zähler auszulesen und an den Energieversorger zu senden.

Ein Server ist zum Empfangen der Daten von dem Gateway und zum Aufbereiten der Daten von dem Gateway ausgestaltet. Das System umfasst ferner eine Einheit, die die aufbereiteten Daten von dem Server empfangen kann und mit einem Fernsehgerät zum Darstellen von Informationen über den Energieverbrauch verbunden ist. Hinsichtlich der Funktion und verschiedenen Ausgestaltungen der einzelnen Komponenten wird zur Vermeidung von Wiederholungen auf das zuvor im Zusammenhang mit dem erfindungsgemäßen Verfahren Gesagte verwiesen.

Vorzugsweise ist die Einheit mit dem Server über eine Breitband-Powerline-Verbindung (BPL) verbunden. Eine alternative Ausgestaltung ist die Verbindung über ein dediziertes Kabel, bspw. ein TV-Kabel. Zur möglichst universellen und einfachen Nutzung des Gerätes kommen Direktverbindungen zum Einsatz, die nicht eines separaten Internetserviceproviders bedürfen. Die Verbindung zwischen Einheit und Server wird vorzugsweise als Punkt-zu-Punkt-Verbindung aufgebaut.

Zum Erzielen eines möglichst kostengünstigen Systems weist der Zähler vorzugsweise lediglich eine Kommunikationsschnittstelle auf, nämlich eine Schnittstelle zum Übertragen der Daten über den Stromverbrauch an den Energieversorger. Damit steht eine große Anzahl von marktüblichen elektronischen Zählern zur Verfügung, die nicht über besondere Schnittstellen verfügen müssen. Der Austausch eines Zählers kann beliebig erfolgen. Der neue Zähler muss lediglich durch den jeweiligen Energieversorger unterstützt werden. Die Darstellung der Information erfolgt vollständig unabhängig von dem gewählten Zähler, da die Verbrauchsdaten zunächst von dem Server empfangen und aufbereitet werden. Dadurch entsteht eine klare Entkopplung zwischen dem Messvorgang und der Darstellung und die einzelnen Komponenten können unabhängig voneinander getauscht und optimiert werden. Die Einheit muss lediglich einmalig angeschafft werden; ein Zählertausch ist vollkommen unabhängig möglich. Gleichzeitig ist dennoch eine genauer und zeitnahe Darstellung des Verbrauchs möglich.

Die Einheit kann zusätzlich eine Schnittstelle zur Ausgabe der empfangenen und aufbereiteten Verbrauchsdaten aufweisen. Über diese Schnittstelle können Verbrauchsdaten beispielsweise für eine Energieberatung aus der Einheit exportiert werden. Zum Vermeiden eines übermäßigen zu übertragenden Datenvolumens könnte die Einheit über einen beschreibbaren nicht flüchtigen Speicher verfügen, in den empfangene und aufbereitete Verbrauchsdaten abgelegt werden. Auf diese Weise kann auf eine Verbrauchshistorie zugegriffen werden, ohne dass die Daten jedes Mal von dem Server geladen werden müssen. Dadurch kann die Menge der übertragenen Daten auf ein Minimum reduziert werden. Sollte der Speicher nicht gefüllt sein oder die zur Darstellung gewünschten Daten nicht verfügbar sein, könnte die Einheit die fehlenden Daten erfragen und nach dem Herunterladen in dem Speicher ablegen. Geeignete Speicher sind beispielsweise Flash-Speicher, die zu günstigen Preisen verfügbar sind.

Vorzugsweise sind der Server und der Zähler entfernt voneinander angeordnet. "Entfernt" bedeutet in diesem Zusammenhang, dass Einheit und Server in unterschiedlichen Gebäuden angeordnet sind. In einer besonders bevorzugten Ausgestaltung bedeutet dies, dass Zähler und Einheit in dem Gebäude oder dem Haus des Nutzers, der Server bei dem Energieversorger oder einer von dem Energieversorger betriebenen Zwischenstation angeordnet ist. Auf diese Weise kann eine besonders leistungsfähige und einfach zu wartende Infrastruktur aufgebaut werden. Dies trägt weiter zur Kostenreduktion und zur einfachen Bedingung bei.

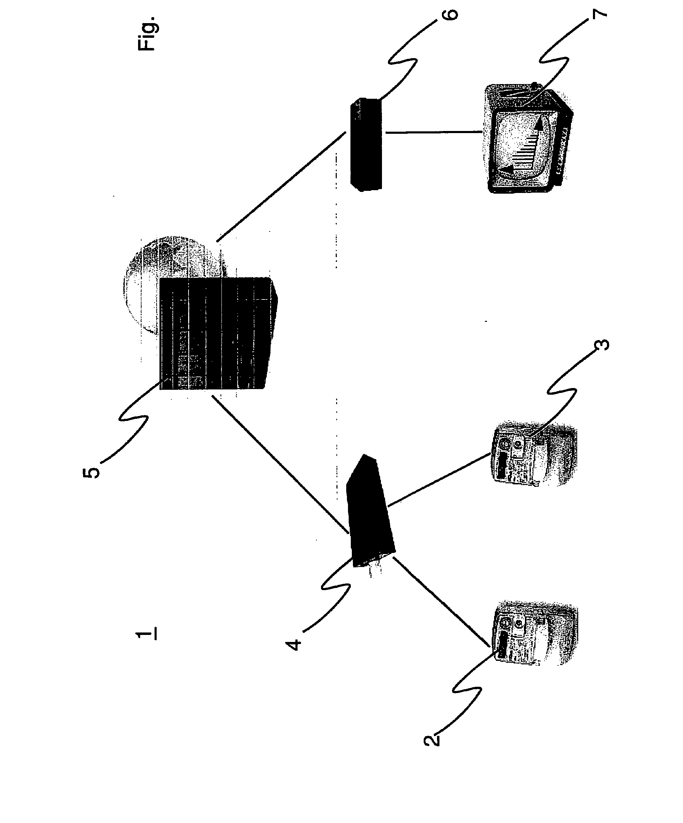

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. dem Anspruch 10 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
Fig. ein erfindungsgemäßes System zum Darstellen von Informationen über den Energieverbrauch, das zur Durchführung eines erfindungsgemäßen Verfahrens geeignet ist.

Die einzige Figur zeigt ein erfindungsgemäßes System 1, das aus zwei elektronischen Stromzählern 2, 3 (SmartMeter), einem Gateway 4, einem Server 5, einer Einheit 6 (nachfolgend auch TV-Box genannt) und einem Fernsehgerät 7 besteht. Die beiden Stromzähler 2, 3 sind jeweils mit dem Gateway 4 über eine Standard-Verbindung verbunden. Beispiele hierfür sind RS-485/232, MBUS (Module Bus), W-MBUS (Wireless Module Bus) oder CS (???). Der Gateway 4 ist mit dem Server 5, der als Datenbank-Server fungiert und eine Datenaufbereitung durchführt, über eine relativ beliebige Verbindung verbunden. Bevorzugter Weise kommt BPL (Broadband PowerLine) zum Einsatz. Möglich sind aber auch andere Breitbandverbindungen wie DSL (Digital Subscriber Line). Eine Verbindung zwischen Server 5 und Einheit 6 ist vorzugsweise über BPL gebildet. Möglich sind aber auch Technologien wie Kabel. Die Einheit 6 ist mit dem Fernsehgerät 7 über eine Standard-Schnittstelle verbunden. Beispiele hierfür sind Scart oder Antennenanschluss.

Der elektronische Zähler (2 oder 3) erfasst den aktuellen Stromverbrauch. Der Gateway 4, der mit dem Zähler über eine Schnittstelle verbunden ist, liest den Zählerstand aus. Dies erfolgt in vorgegebenen Zeitabständen, vorzugsweise periodisch, wobei die Periodendauer an die jeweiligen Anforderungen angepasst sein kann (kurze Periodendauer (bis hinunter in den Sekundenbereich) bei der Erfassung des aktuellen Verbrauchs, längere Periodendauern (bis zu einer Stunde und darüber hinaus) bei der Erfassung von Verbrauchsverläufen).

Der Gateway 4 sendet die Daten an den Server 5 oder wird in regelmäßigen Abständen von dem Server 5 abgefragt. Der Server 5 ist mit dem Gateway 4 über ein BPL-Netzwerk verbunden und dient der Aufbereitung der Daten, die von dem Gateway 4 empfangen werden. Der Server 5 befindet sich außerhalb des Gebäudes des Kunden. Die von dem Server 5 aufbereiteten Daten werden an die TV-Box 6 gesendet. Hierzu kommt das BPL, das Kabelnetzwerk oder ein anderes breitbandiges Netzwerk in Frage. Die TV-Box 6 sendet Bildinformationen an das TV-Gerät 7, das die Informationen einem Nutzer darstellt. Die Bildinformationen können den aktuellen Verbrauch, den Verbrauch in der zurückliegenden Zeit und/oder Vergleichwerte enthalten. Diese können als Standbild, als Animation oder als wechselnde Standbilder dem Nutzer angezeigt werden, um lediglich einige Darstellungsformen beispielhaft zu nennen. Durch die Aufbereitung auf dem Server können weitere interessante Informationen (z.B. Vergleichsdaten von Peer-Groups) dem Kunden bereitgestellt werden.

Energiedaten werden am Fernseher angezeigt. Im Gegensatz zu den existierenden Konzepten wird die Kommunikation dabei nicht im Haus - vom Zähler direkt zum Fernseher - abgewickelt, sondern die Daten werden erst regulär vom Smart Meter auf einen Server übertragen. Anschließend werden die Informationen an eine TV Box gesendet bzw. von dieser abgerufen, die sich wieder im Haushalt des Kunden befindet. Die Anbindung der TV Box an den Server erfolgt über BPL oder Kabel. Die TV Box unterstützt gängige TV Schnittstellen und präsentiert dem Kunden die Verbrauchsdaten am Fernseher.

Wie in der einzigen Fig. dargestellt, besteht das System 1 auf der linken Seite der Fig. aus der Ableseinfrastruktur für das Smart-Metering. Im Grunde genommen kann die Erfindung mit jeder Smart-Metering-Infrastruktur genutzt werden. In der Fig. wurde die bevorzugte Ausführung dargestellt: Die breitbandige Anbindung eines Gateways, der die standardmäßigen Meter-Schnittstellen unterstützt. Das Ableseintervall spiegelt sich in dem Anzeigeintervall am Fernseher wieder.

Die Anbindung des Fernsehers an den Server, der die Energiedaten speichert, ist Kern der Erfindung. Die Erfindung besteht daher aus den folgenden drei wichtigen Komponenten:
Datenbank + Server:
   Der Server liest den Stromzähler aus und speichert die Daten in einer Datenbank. Die Daten sind für einen eine Anzeigeeinheit zugänglich, die sie für den Kunden darstellen. Daneben werden die Daten dem Energieversorger zu Abrechnungs- und Erfassungszwecken bereitgestellt gemacht. Der Server befindet sich zentral, außerhalb des Kundengebäudes.

TV Box:
Die TV Box macht die Anzeige auf dem Fernseher erst möglich. Sie ist auf der einen Seite an den Server mit der Datenbank angebunden. Die Kommunikation wird über BPL, Kabel oder ein anderes breitbandiges Netzwerk abgewickelt. Die TV Box ist in der Lage, die vom Server abgerufenen numerischen Werte grafisch für die Darstellung aufzubereiten. Daneben unterstützt sie gängige TV Schnittstellen (SCART, HDMI). Die TV Box bereitet die Daten zur Anzeige auf dem Fernseher auf. Die TV Box befindet sich in der Wohnung bzw. im Haus des Kunden.

Fernseher:
Handelsüblicher Fernseher, der in 95% der Haushalte in Deutschland vorhanden ist. Die bereits vorhandenen Geräte müssen nicht ausgewechselt werden, sondern können für die grafische Darstellung genutzt werden.

Wenn der Kunde auf seinem TV den Kanal auswählt, auf dem die TV Box einspeist, bekommt er die Metering-Daten präsentiert. Es ist denkbar die Metering-Daten als Standbild, als Animation oder als wechselnde Standbilder darzustellen. Auch eine Echtzeitanzeige ist denkbar, wenn die anderen Komponenten, vor allem die Kommunikation, die häufigen Auslesevorgänge unterstützen.

Die Integration anderer Daten als lediglich der Zählerwerte, ist durch den breitbandigen Anschluss der TV Box einfach möglich. Die TV Box muss Inhalte abholen oder bekommt Inhalte gesendet, die zusätzlich zu den eigenen Energiedaten mit aufbereitet werden. Es erscheint sinnvoll, dass hierbei Daten an die Box gesendet werden, da sonst eine Intelligenz in der Box festlegen müsste, was zusätzlich angezeigt wird. Diese Details wären über adäquate Interfaces in der Box zu definieren. Die Installation von Updates auf den Boxen kann ähnlich erfolgen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: System
- 2: Elektronischer Stromzähler
- 3: Elektronischer Stromzähler
- 4: Gateway
- 5: Server
- 6: Einheit (TV-Box)
- 7: Fernsehgerät

## Patentansprüche

1. Verfahren zum Darstellen von Informationen über den Energieverbrauch eines Nutzers umfassend die Schritte:
Auslesen eines elektronischen Stromzählers (2, 3) bei dem Nutzer zum Ermitteln von Daten über den Energieverbrauch,
Übermitteln der Daten an einen Server (5),
Aufbereiten der Daten durch den Server (5),
Übermitteln der aufbereiteten Daten an eine Einheit (6) bei dem Nutzer und
Darstellen der von der Einheit (6) empfangenen Daten auf einem mit der Einheit (6) verbundenen Fernsehgerät (7).

2. Verfahren nach Anspruch 1, **dadurch gekennzeichnet, dass** die aufbereiteten Daten von der Einheit (6) abgefragt werden, wobei in Reaktion auf eine Anfrage von der Einheit (6) aufbereitete Daten und gegebenenfalls weitere Daten an die Einheit (6) gesendet werden.

3. Verfahren nach Anspruch 1 oder 2, **dadurch gekennzeichnet, dass** die aufbereiteten Daten von dem Server (5) regelmäßig, vorzugsweise periodisch, an die Einheit (6) gesendet werden.

4. Verfahren nach einem der Ansprüche 1 bis 3, **dadurch gekennzeichnet, dass** die Aufbereitung der von dem Stromzähler (2, 3) empfangenen Daten das Ablegen der Daten in einer Datenbank umfasst.

5. Verfahren nach einem der Ansprüche 1 bis 4, **dadurch gekennzeichnet, dass** die bei der Einheit (6) empfangenen Daten durch die Einheit (6) grafisch aufbereitet und vorzugsweise in Form eines Diagramms oder einer Grafik auf dem Fernsehgerät (7) dargestellt werden.

6. Verfahren nach Anspruch 5, **dadurch gekennzeichnet, dass** die empfangenen und grafisch aufbereiteten Daten in Form eines Standbilds, eines wechselnden Standbilds oder einer Animation auf dem Fernsehgerät (7) dargestellt werden.

7. Verfahren nach einem der Ansprüche 1 bis 6, **dadurch gekennzeichnet, dass** durch die Einheit (6) Informationen über den aktuellen Energieverbrauch, eine Verbrauchshistorie, Vergleichsdaten und/oder weitere Informationen dargestellt werden, wobei die Darstellung vorzugsweise in Echtzeit erfolgt.

8. Verfahren nach einem der Ansprüche 1 bis 7, **dadurch gekennzeichnet, dass** die Einheit (6) bei dem Server (5) mittels eines Schlüssels identifiziert wird, wobei der Schlüssel vorzugsweise in der Einheit (6) abgelegt ist.

9. Verfahren nach einem der Ansprüche 1 bis 8, **dadurch gekennzeichnet, dass** die Kommunikation zwischen Server (5) und Einheit (6) in verschlüsselter Form erfolgt.

10. System zum Darstellen von Informationen über den Energieverbrauch eines Nutzers, insbesondere zum Durchführen eines Verfahrens nach einem der Ansprüche 1 bis 9, umfassend:
einen elektronischen Stromzähler (2, 3) zum Ermitteln von Daten über den Energieverbrauch,
ein Gateway (4), der zum Auslesen von Zählerständen aus dem Stromzähler (2, 3) und zum Weiterleiten von Daten in ein vorzugsweise breitbandiges Netzwerk ausgestaltet ist,
einen Server (5), der zum Empfangen von Daten von dem Gateway (4) und zum Aufbereiten der Daten von dem Gateway (4) ausgestaltet ist, und
eine Einheit (6), die zum Empfangen von aufbereiteten Daten von dem Server (5) ausgestaltet ist und mit einem Fernsehgerät (7) zum Darstellen von Informationen über den Energieverbrauch verbunden ist.

11. System nach Anspruch 10, **dadurch gekennzeichnet, dass** die Einheit (6) über BPL (Breitband Power Line) oder TV-Kabel vorzugsweise über eine Punkt-zu-Punkt-Verbindung mit dem Server (5) verbunden ist

12. System nach Anspruch 10 oder 11, **dadurch gekennzeichnet, dass** der Stromzähler (2, 3) lediglich über eine Schnittstelle zum Übertragen der Daten über den Energieverbrauch an den Server (5) verfügt.

13. System nach einem der Ansprüche 1 bis 12, **dadurch gekennzeichnet, dass** der Server (5) und die Einheit (6) entfernt voneinander in unterschiedlichen Gebäuden angeordnet sind.
